Europäisches Patentamt

European Patent Office

Office européen des brevets

(11) Publication number: **0 297 683**
**B1**

# EUROPEAN PATENT SPECIFICATION

(45) Date of publication of the patent specification:
30.05.90

(51) Int. Cl.⁵: **F16K 24/04**

(21) Application number: 88201353.5

(22) Date of filing: 29.06.88

(54) A float valve for de-aerating and aerating respectively of liquids flowing through a conduit.

(30) Priority: 29.06.87 NL 8701519

(43) Date of publication of application:
04.01.89 Bulletin 89/1

(45) Publication of the grant of the patent:
30.05.90 Bulletin 90/22

(84) Designated Contracting States:
AT BE CH DE ES FR GB GR IT LI LU NL SE

(56) References cited:
FR-A- 694 646
US-A- 4 011 884

(73) Proprietor: Van den Blink-Jansen, Saskia Josquine Manon, Bosstraat 59, NL-6291 CG Vaals(NL)

(72) Inventor: Van Den Blink, Arie Johannes Sytse, Wipmolen 2, NL-3352 XP Papendrecht(NL)

(74) Representative: Boelsma, Gerben Harm, Ir. et al, Octrooibureau Polak & Charlouis Laan Copes van Cattenburch 80, NL-2585 GD Den Haag(NL)

## Description

The invention relates to a float valve device for de-aerating and aerating respectively of liquids flowing through a conduit as defined in the first part of claim 1.

Such a device is known from FR-A 694 646 and US-A 4 011 884 respectively. In this well-known device the main valve has a relatively large lifting height, viz. a lifting height which is almost equal to the largest diameter of the main valve (FR-A 694 646) or even larger (US-A 4 011 884). The piston member connected with the main valve has a correspondingly large stroke length. This implies a relatively long time for the main valve to get closed.

The danger involved is, that when filling the system – and thereby expelling air from the main valve housing – liquid may enter the outlet space while the main valve is still in the process of closing. Especially in case of highly polluted liquids (water) this may be disadvantageous, as the de-aeration system (including the main valve and its seat) may also easily become filthy. The risk for such a situation is greater according as the pressure in the system is higher. In addition to this the auxiliary valve becomes closed already at a moment at which the closing procedure of the main valve has to start yet. This means that during the closing movement of the main valve the air above the piston element will have to be compressed, which means an additional slowing down of the closing procedure of the main valve. (The quantity of air leaking off from the cylinder space above the piston element via the piston circumference or through an orifice respectively is neglectably small).

On the other hand the main valve opens too slowly, viz. when in operation so much air has been collected – under pressure – in the space above the water in the main valve housing that the float has sunk into its lowermost position and thereby has caused the auxiliary valve to open. In that case a substantial quantity of air has to flow just – at a rather slow rate – through the relatively narrow duct through the main valve stem into the cylinder space above the piston element so as to pressurize said space and then cause the piston element to perform its main valve opening stroke.

According to the invention to further develop a generic float valve device there is provided a float valve device as defined in claim 1.

A small lifting height implies, of course, a relatively larger valve diameter and piston diameter respectively. Due to the measures according to this invention a substantially quicker reacting de-aeration and aeration device respectively is obtained. Due to the fact that the piston element is, in its lower position, out of sealing contact with the cylinder wall the cylinder space above the piston element may – at the beginning of the (short) closing movement of the main valve – release air towards the atmosphere so that – unlike with the well-known device – no braking action will be exerted against the closing movement of the main valve. The piston element may be readily adjusted in such a position that in case of a constant supply of air from the conduit system a continuous de-aeration will take place.

According to a further feature of the invention, the wall of the cylinder chamber is merging at its lower end with a conically widened portion.

In a preferred embodiment the auxiliary valve is constituted by a needle valve, the stem of which extending upwardly through a lower widened portion of the duct in the main valve stem, said needle valve stem being secured at its lower end to the float and cooperating with its upper end with the transition to a non-widened upper portion of the duct.

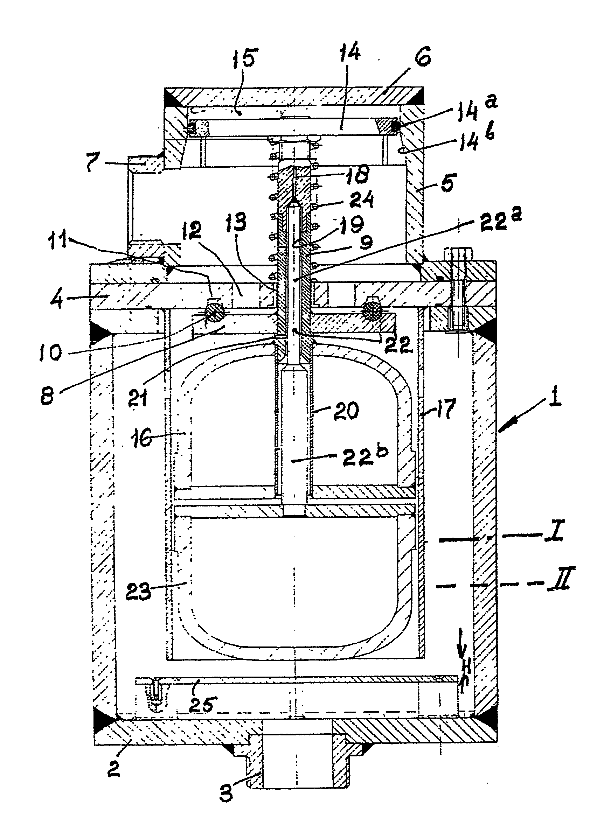

The invention will be hereinafter further explained by way of example with reference to the drawing.

The float valve de-aerating device shown in the drawing in vertical section has and e.g. cylindrical housing 1, the bottom 2 of which is provided with an inlet 3 for connection to the de-aerating location of the liquid conduit to be de-aerated. The housing 1 is closed at its upper end by a cover 4.

On top of the cover 4 an extension piece 5 is provided which is constituted by a cylindrical wall which is closed at its upper end by a cover 6 and has a lateral outlet 7 towards the atmosphere.

In the chamber below the cover 4 a main valve 8 is provided which is secured to a stem 9. The valve 8 carries on its top surface a sealing ring 10 cooperating with a corresponding annular seat 11 in the lower surface of the cover 4. The valve 8 has a lifting height h (H) which is a fraction of the effective diameter of the valve.

In the central portion of the cover 4 surrounded by the seat 11 a pluality of through apertures 12 are provided which together constitute the main outlet opening of the de-aerating device. The stem 9 extends upwardly through a central guiding sleeve 13 in the cover 4 and carries at its upper end a disc shaped element 14 which in the manner of a piston cooperates with a cylindrical chamber 15 in the upper part of the extension piece 5. The diameter of the disc shaped piston element 14 is slightly larger than that of the sealing ring 10. A bell shaped element 16 is secured to the lower end of the stem 9 just projecting below the valve body 8, which element is adapted to move upwardly and downwardly together with the stem and is guided within a guiding sleeve 17 suspended from the cover 4. The stem 9 has a central duct comprising a bore 18 opening into the chamber 15 and which downwardly merges with a wider bore 19 which at the lower end of the stem 9 opens into a central sleeve 20 of the bell shaped element 16. A radial bore 2 connects the bore 19 with the upper portion of the chamber within the housing 1. The conical transition between the bores 18 and 19 acts as a seat for an auxiliary valve 22 which is formed as a needle valve. The upper portion 22a of the stem of this needle valve extends upwardly through the wider bore 19 and has its upper end shaped in correspondence with the above mentioned seat. The needle valve 22 futher more extends with a lower and thicker stem portion 22b downwardly through the central sleeve 20 and is secured at the lower end of that stem portion to the float body. The float body 23 is, as is the bell shaped element 16 thereabove, upwardly and downwardly movable within the guiding sleeve 17.

Around the portion of the main valve stem 9 situated between the piston element 14 and the housing cover 4 there is a helical spring 24 forming a counter weight for own weight of the main valve 8 and the parts connected therewith.

Spaced above the bottom 2 a disc shaped element 25 is provided which is adapted to laterally divert a liquid flow entering through the inlet 3, so that no dynamic pressure is exerted to the float body 23.

The drawing shows the device in a situation in which the main valve 8 and the auxiliary valve 22 are both closed.

This situation will e.g. prevail when the housing 1 has been filled with liquid (water) up to the level indicated I. The pressure of the air in the housing 1 over the liquid is then greater than that in the outlet chamber of the projection 5. Air carried along in this situation by the liquid will collect in the chamber over the liquid and will increase the pressure within that chamber. Thereby the liquid level within the housing is pushed back to the level II, at which level the upward force of the liquid on the float body 23 is lowered below the weight of this body. Thereby the float body 23 sinks and opens the needle valve 22 so that air at relatively high pressure is permitted to flow from the chamber over the liquid through the bores 21, 19 and 18 towards the cylinder chamber 15. Thereby a downwardly acting force is imparted through the piston element 14 to the main valve 8, which is larger than the closing force so that the valve 8 opens and the air present above the liquid in the housing 1 is permitted to quickly exhaust through the apertures 12. Thereby the liquid will quickly return to level I whereby the float body 23 is again moved upwardly and the needle valve 22 is pushed on its seat. Subsequently the main valve 8 and the (closed) auxiliary valve 22 jointly continue to move until also the main valve 8 has arrived in its closed position. This situation will then be maintained until, as a consequence of an increase of the quantity of air over the liquid, again a lowering of the level from I to II takes place.

As soon as the pressure in the conduit becomes zero, e.g. when the pump taking care of the transport of the liquid through the conduit is switched off, the liquid level sinks to below level II and the float body 23 is again lowered onto the disc shaped element 25. This causes the auxiliary valve 22 to open whereas the main valve 8 will likewise due to the difference in pressure at both sides of the housing cover 4 disappearing.

In the opened portion of the main valve 8 the sealing ring 14a of the piston-like element 14 will be located just within the conical widening wall portion 14b so that there will be an air connection between the cylinder chamber 15 and the atmosphere. In the closed position of the valve 8 the ring 14a has just left said conical widening wall portion 14b.

**Claims**

1. A float valve device for de-aerating and aerating respectively of liquids flowing through a conduit, comprising a housing (1) having an inlet (3) to be connected to the conduit at the de-aerating location and a cover (4) having at least one outlet opening (12) cooperating with a main valve (8) provided in the housing, the stem (9) of which extending through the cover into an outlet cylinder space with a cylinder wall located therabove and carrying at its upper end a disc-like piston element (14) which cooperates with a cylinder chamber (15) formed within said outlet cylinder space, said stem having a duct (18, 19), which constitutes a connection between said cylinder chamber (15) above the piston element and a main valve chamber under the cover, said duct is adapted to be closed by an auxiliary valve connected to a float body provided in the housing below the main valve, said piston element having a diameter which is larger than the effective diameter of the main valve, characterized in that the float valve device with the main valve has a lifting height (H) which is a fraction of the effective diameter of the main valve, the piston element being positioned in the cylinder space in such a way that when performing its correspondingly short stroke it moves between an upper position, corresponding with the closed position of the main valve, in which the piston element is just in sealing contact with the cylinder wall, and a lower position, corresponding with the opened position of the main valve, in which the piston element is just out of sealing contact with the cylinder wall.

2. A device according to claim 1, characterized in that the wall of the cylinder chamber is merging, at its lower end, with a conically widened portion.

3. A device according to claims 1–2, characterized in that a helical spring is provided between the piston element and the cover around the main valve stem (9), compensating for the weight of the main valve and the parts connected therewith, said spring being designed so that the piston element in the opened inoperative position of the main valve is kept just within the conically widened wall portion.

4. A device according to claims 1–3, characterized in that the auxiliary valve is constituted by a needle valve, the stem of which extending upwardly through a lower widened portion of the duct in the main valve stem, said needle valve stem being secured at its lower end to the float body and cooperating with its upper end with the transition to a non-widened upper portion of the duct.

**Patentansprüche**

1. Schwimmerventil zum Entlüften und/oder Belüften von durch eine Leitung strömenden Flüssigkeiten, versehen mit einem Gehäuse (1) mit einem an der Entlüftungsstelle mit der Leitung zu verbindenden Einlass (3) und einem Deckel (4) der mindestens eine, mit einem im Gehäuse vorgesehenen Hauptventil (8) zusammenarbeitenden Auslassöffnung (12) aufweist, wobei die Stange (9) des Hauptventils durch den Deckel hindurch in einen oberhalb desselben vorgesehenen zylindrischen Auslassraum ragt und an seinem oberen Ende ein scheibenförmiges Kolbenelement (14) trägt, das mit einem im zylindrischen Auslassraum gebildeten Zylinderkammer (15) zusammenarbeitet, welche Stange ein Kanal (18, 19) aufweist, der eine Verbindung zwischen der Zylinderkammer (15) oberhalb des Kolbenelementes und einer Haupt-Ventilkammer unterhalb des Deckels bildet, welcher Kanal abschliessbar ist mittels eines Hilfsventils, das mit einem im Gehäuse unterhalb des Hauptventils vorgesehenen Schwimmerkörper verbunden ist, welches Kolbenelement ein Durchmesser hat, der grösser als der wirksame Durchmesser des Hauptventils ist, dadurch gekennzeichnet, dass das Schwimmerventil mit dem Hauptventil einen Hub (H) aufweist, der einem Bruchteil des wirksamen Durchmessers des Hauptventils entspricht, wobei das Kolbenelement in der Weise im zylindrischen Raum angeordnet ist, dass es beim Ausführen seines entsprechend kurzen Hubs bewegt zwischen einer der geschlossenen Lage des Hauptventils entsprechenden oberen Lage, in welcher das Kolbenelement gerade in abdichtendem Kontakt mit der Zylinderwand steht, und einer der geöffneten Lage des Hauptventils entsprechenden unteren Lage, in welcher das Kolbenelement gerade ausser abdichtendem Kontakt mit der Zylinderwand steht.

2. Vorrichtung nach Anspruch 1, dadurch gekennzeichnet, dass die Wand der Zylinderkammer am unteren Ende in einen sich konisch erweiternden Teil ausläuft.

3. Vorrichtung nach Ansprüchen 1–2, dadurch gekennzeichnet, dass um die Hauptventilstange (9), zwischen dem Kolbenelement und dem Deckel, eine Schraubenfeder zum Ausgleich des Gewichts des Hauptventils und der mit diesem verbundenen Teile vorgesehen ist, welcher Feder derart bemessen ist, dass das Kolbenelement in der geöffneten, unwirksamen Lage des Hauptventils gerade innerhalb des konisch erweiterten Wandteil gehalten wird.

4. Vorrichtung nach Ansprüchen 1–3, dadurch gekennzeichnet, dass das Hilfsventil von einem Nadelventil gebildet wird, dessen Stange sich nach oben durch einem unteren erweiterten Teil des Kanals in der Hauptventilstange erstreckt, welche Nadelventilstange am unteren Ende am Schwimmerkörper befestigt ist, während das obere Ende derselben mit dem Übergang zu einem nicht erweiterten oberen Teil des Kanals zusammenarbeitet.

**Revendications**

1. Dispositif à soupape flotteur pour aérer resp. déaérer de liquides coulant dans une conduite, comprenant un corps (1) ayant une entrée (3) adaptée à être reliée à la conduite à l'endroit de déaérage, et un couvercle (4) ayant au moins une ouverture (12) de sortie coopérant avec une soupape (8) principale préone dans le corps, la tige (9) de ladite soupape s'étendant à travers le couvercle jusque dans une espace cilindrique de sortie avec une paroi de clinidre, située en dessus du couvercle et portant à l'extrémité supérieure un élément (14) de piston en forme de disque coopérant avec une chamber (15) de cilindre formée à l'intérieur de ladite espace cilindrique, ladite tige comprenant une canalisation (18, 19) constituant une connexion entre ladite chambre (15) de cilindre au-dessus de l'élément de piston et de la chambre de la soupape principale au-dessous de la couvercle, ladite canalisation étant agençée à être fermée par une soupape auxiliaire reliée à un corps flotteur prévu dans le corps au-dessous de la soupape principale, ledit élément piston ayant un diamètre plus grand que le diamètre effectif de la soupape principale, caractérisé en ce que le dispositif à soupape flotteur avec la soupape principale a une hauteur (H) d'élévation étant une fraction du diamètre effectif de la soupape principale, l'élément de piston étant situé dans l'espace cilindrique de sorte qu'en exécutant son coup de longueur petite correspondant, il se déplace entre une position supérieure correspondant à la position fermée de la soupape principale, dans laquelle l'élément de piston est justement en contact étanche avec la paroi de cilindre, et une position inférieure correspondant à la position ouverte de la soupape principale, dans laquelle l'élément de piston a justement quitté son contact étanche avec la paroi de cilindre.

2. Dispositif selon la revendication 1, caractérisé en ce que la paroi de la chambre de cilindre passe à son extrémité inférieure dans une partie s'élargeant de façon conique.

3. Dispositif selon la revendication 1–2, caractérisé en ce qu'un ressort hélicoîdal est prévu entre l'élément de piston et la couvercle autour de la tige (9) de la soupape principale, en compensant le poids de la soupape principale et des pièces reliées à lui, ledit ressort étant désigné de sorte que l'élément de piston est retenu dans la position ouverte inopérative de la soupape principale justement à l'intérieur la partie élargie de façon conique de paroi.

4. Dispositif selon les revendications 1–3, caractérisé en ce que la soupape auxiliaire est constituée d'une soupape aiguille, la tige de laquelle s'étandant en haut à travers une partie inférieure élargie de la canalisation dans la tige de la soupape principale, ladite soupape aiguille étant fixée à son extrémité inférieure au corps flotteur et coopérant avec son extrémité supérieure avec la position de passage à une partie supérieure non-élargie de la canalisation.

EP 0 297 683 B1